# EUROPEAN PATENT SPECIFICATION

(11) **EP 2 462 485 B1**
(45) Date of publication and mention of the grant of the patent: **24.09.2014**
(21) Application number: 10807266.1
(22) Date of filing: 06.08.2010
(51) Int. Cl.: G03B 17/56, B66F 11/04, F16M 11/18, F16M 11/20, F16M 11/28, F16M 11/42

(54) **TELESCOPING CAMERA CRANE**
TELESKOPKAMERAKRAN
GRUE TÉLESCOPIQUE DE CAMÉRA

(30) Priority: 06.08.2009 US 537200; 15.04.2010 US 761199; 17.02.2010 US 706805
(43) Date of publication of application: 13.06.2012
(73) Proprietor: Chapman/Leonard Studio Equipment, Inc., North Hollywood California 91605 (US)
(72) Inventor: CHAPMAN, Leonard, T., North Hollywood CA 91605 (US); GORBATOV, Stanislov, North Hollywood CA 91606 (US)
(74) Representative: Viering, Jentschura & Partner Patent- und Rechtsanwälte
(86) International application number: PCT/US2010/044792
(87) International publication number: WO 2011/017670

(56) References cited:
- EP-A1- 2 020 558
- GB-A- 2 111 943
- US-A- 3 588 661
- US-A- 4 008 426
- US-A- 5 033 705
- US-A- 5 697 757
- US-A1- 2003 161 622
- US-A1- 2005 191 050
- US-A1- 2007 230 947

## Description

### BACKGROUND

The field of the invention is camera cranes. A new type of camera crane is described in International Patent Publication WO/2005/085948. This design uses a hydraulic system including a pair of hydraulic cylinders which alternately pull on cables to extend and retract telescoping crane sections. This system is efficient and virtually waterproof and provides smooth and near silent extension and retraction movement. To provide a longer reach, multiple telescoping sections may be used, along with multiple sets of cables for extending and retracting the telescoping sections.

The cables that are driven directly by the hydraulic system, referred to here as primary cables, carry the highest tensile loads. These primary cables accordingly may tend to slightly stretch momentarily when the hydraulic system initially pulls on the cables. This can result in a slight initial delay of the extending or retracting telescoping camera crane arm movement. In some uses, this delay has no significant effect, for example with slow arm movements. However, for other camera movements, a delay of even a fraction of a second can make precise crane arm movements more difficult to achieve. The delay can also adversely affect sensory aspects of crane arm operation. Improvements in this type of camera crane design have now been made.

The camera crane described in International Patent Publication WO/2005/085948 may also use cables in a camera platform leveling system. These leveling cables may similarly stretch slightly but significantly, when heavily loaded. Under these conditions, the cables may tend to exert spring-like actions. This can cause slight oscillation movements of the camera platform. The oscillations can disrupt filming, especially when magnifying lenses are used.

The camera platform may alternatively be stabilized using an active stabilizing system which uses sensors, motors and a feedback loop to keep the platform level. In this design, leveling cables are not used or needed. While the active stabilizing system works well, when it is turned off, the camera platform may oscillate.

Further, a telescopic camera crane is known from US Patent Publication US 2005/0191050, which has mechanical drive and camera platform leveling systems, allowing for water resistant submerged operation. Telescopic sections of the cane arm are driven by a hydraulic system, for smooth and near silent extension and retraction movement.

### BRIEF STATEMENT OF THE INVENTION

The present invention provides a camera crane comprising an arm as featured in the independent claim. Preferred embodiments of the present invention are described in the dependent claims.

The invention relies as well in sub-combinations and sub-systems of the elements described. For example, each of the features listed above can be used as an improvement in a conventional crane design. Alternatively, they may be used in various combinations with each other.

### BRIEF DESCRIPTION OF THE DRAWINGS

In the drawings, wherein the same reference number indicates the same element in each of the views:
FIG. 1 is a side view of a new camera crane arm design.
FIG. 2 is a side view of the crane shown in FIG. 1 in a horizontal and extended position.
FIG. 3 is a side view of the crane in a retracted position.
FIG. 4 is a top view of the crane shown in FIG. 3.
FIG. 5 is a view taken along line 5-5 of FIG. 3.
FIG. 6 is a front view of the counterweight carrier shown in FIG. 5, without the counterweights.
FIG. 7 is a top view taken along line 7-7 of FIG. 5.
FIG. 8 is a side view taken along line 8-8 of FIG. 7.
FIG. 9 is a side view taken along line 9-9 of FIG. 5.
FIG. 10 is an enlarged side view, in part section, of the back end of the crane shown in FIGS. 1 and 2.
FIG. 11 is a split front view with various components removed or omitted for clarity of illustration.
FIG. 12 is another front view with additional components shown. In FIGS. 11 and 12, the right side R of the view shows the roller arrangement at the front end of the crane arm tubes, and the left side L of the view shows the roller arrangement at the back end of the crane arm tubes.
FIG. 13 is a side view of a central area of the first section of the crane shown in FIGS. 1 and 2.
FIG. 14 is a side view of the front end of the crane, in a retracted position.

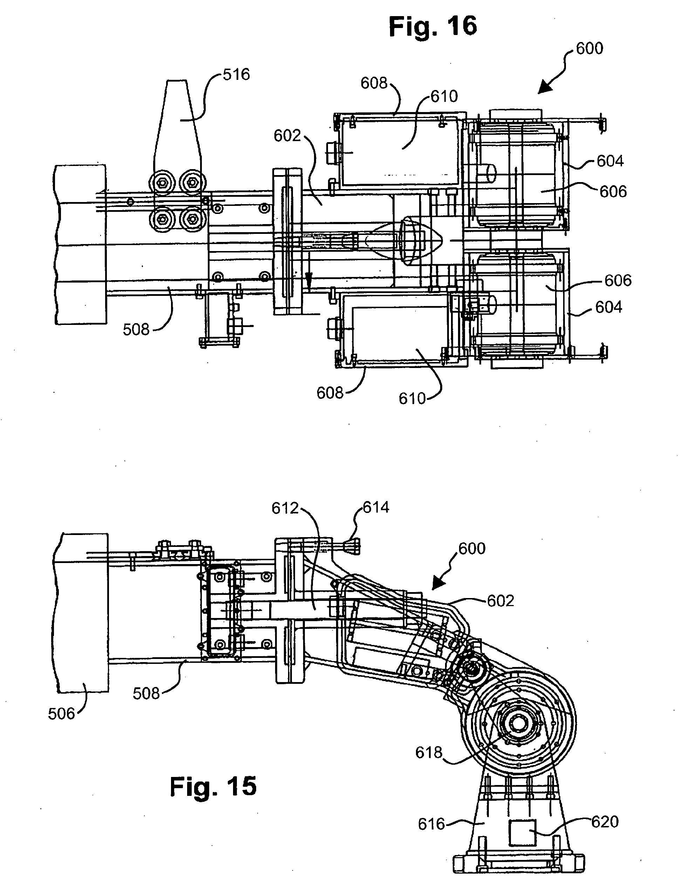

FIG. 15 is a side view of a nose assembly attached to the front end of the crane.
FIG. 16 is a top view of the nose assembly shown in FIG. 15.

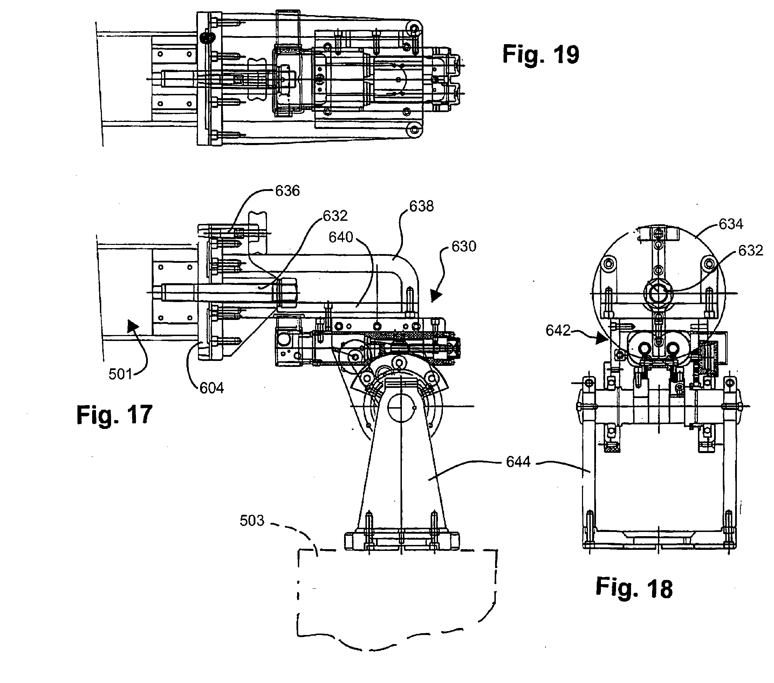

FIG. 17 is a side view of an alternative nose assembly design.
FIG. 18 is a front view of the nose assembly shown in FIG. 17.
FIG. 19 is a top view of the nose assembly shown in FIG. 17.
FIG. 20 is front view of the U-frame shown in FIG. 13.
FIG. 21 is side view of the U-frame shown in FIG. 20.
FIG. 22 is a top view of the U-frame shown in FIG. 20.

### DETAILED DESCRIPTION OF THE DRAWINGS

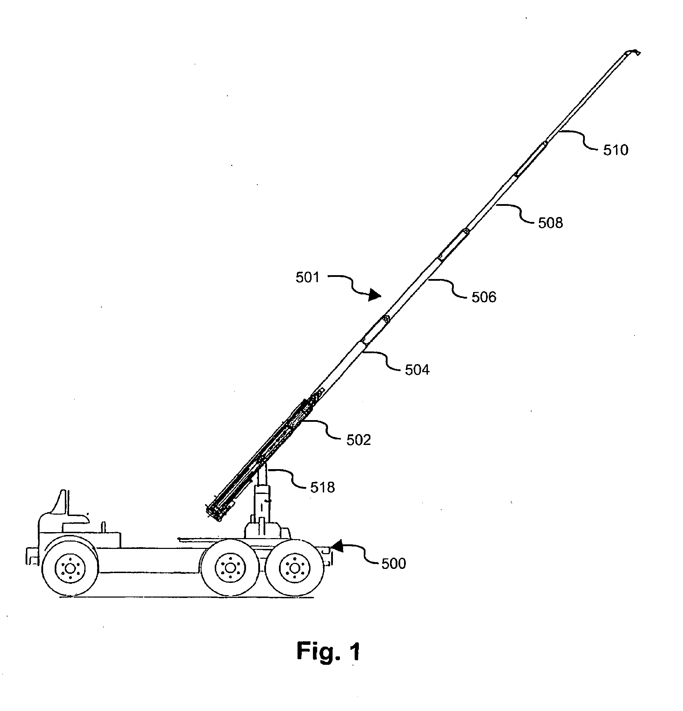

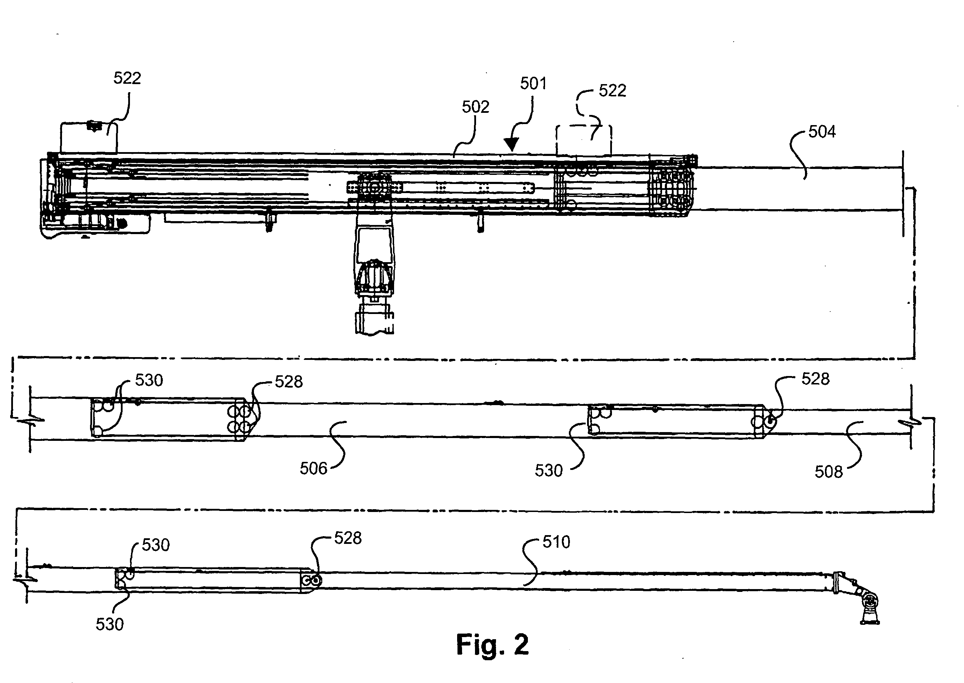

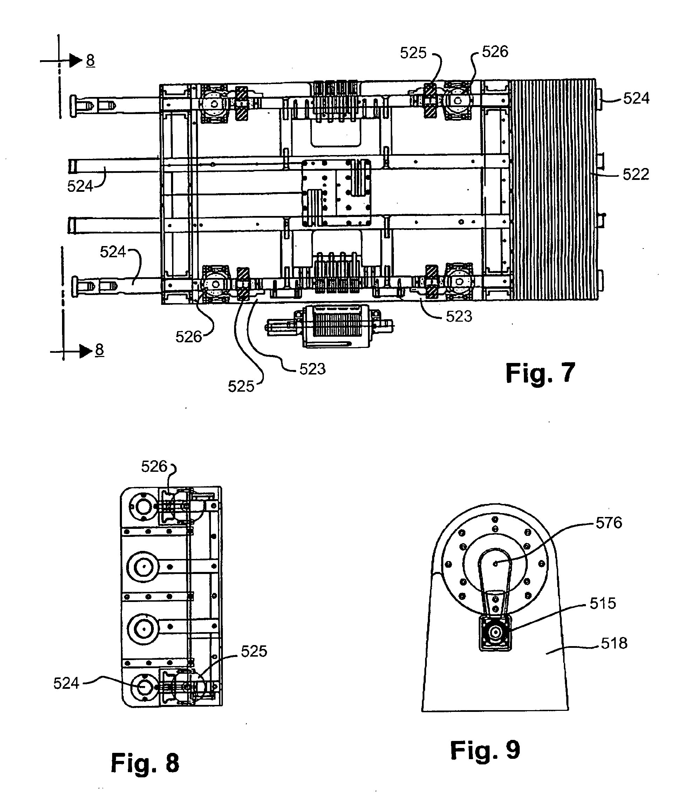

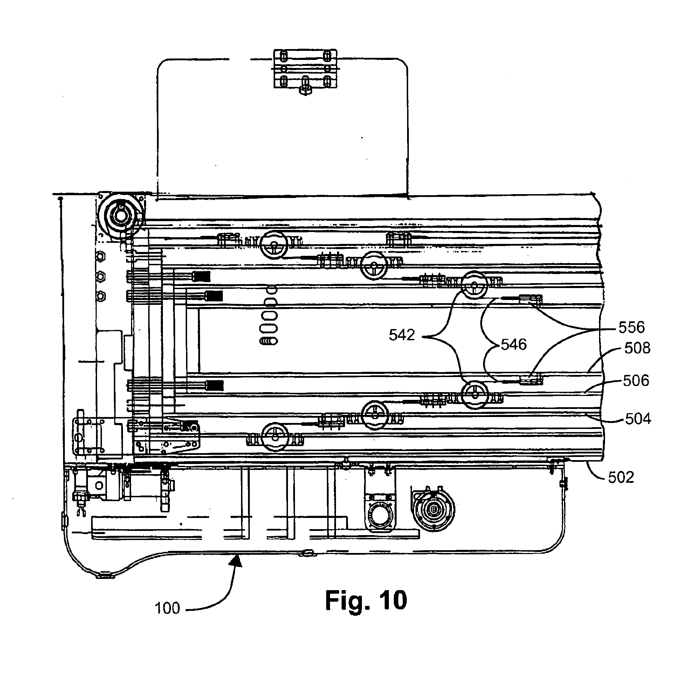

FIGS. 1-12 show a new crane arm design 501 which can achieve unprecedented heights. As shown in FIGS. 1 and 2, the crane arm 501 has a first tube or section 502 pivotably supported on a U-frame 518. A second section 504 is telescopically supported in the first section, a third section 506 is telescopically supported in the second section 504, a fourth section 508 is telescopically supported in the third section 506 and a fifth section 510 is telescopically supported in the fourth section 508.

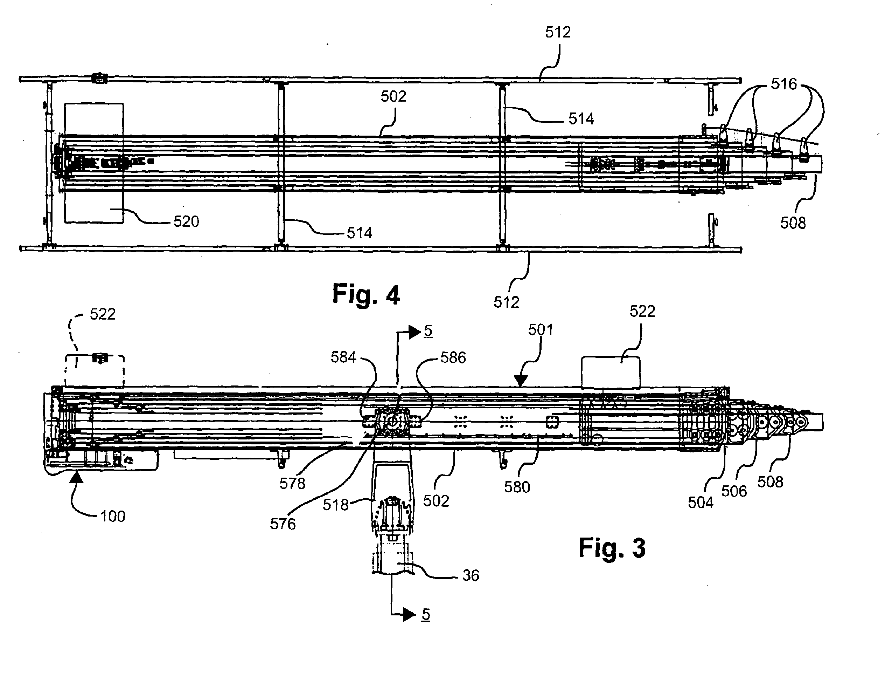

FIGS. 1 and 2 show the crane arm 501 extended while FIGS. 3 and 4 show the crane arm retracted. As shown in FIG. 4, side bars 512 may be attached to the first tube 502 via lateral bars 514. The side bars 512 provide a convenient grasping surface, to allow crane operators to manually maneuver the crane arm 501.

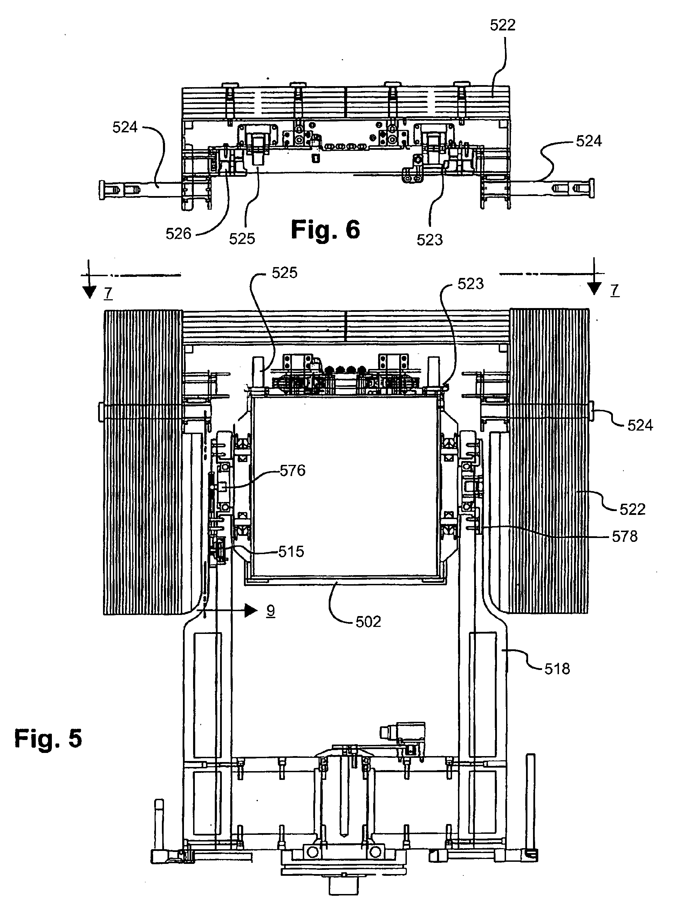

The crane arm 501 has a counter weight carrier 520 with FIG. 3 showing the counter weight carrier 520 in its forward most position, with the crane 501 fully retracted. FIG. 2 shows the counter weight carrier 520 in its rear most position, with the crane arm 501 fully extended. Turning to FIGS. 5 and 6, individual counterweight plates 522 are secured to the counterweight carrier 520 on plate holders 524. A pair of spaced apart counterweight tracks 523 are attached to the top surface of the first tube 502. Vertical rollers 525 support the counterweight carrier 520 in the vertical axis and allow the counterweight carrier 520 to smoothly roll forward and aft along the top surface of the first tube 502, with minimum resistance. Horizontal rollers 526, shown in FIG. 6, roll along the side surfaces of the counterweight tracks 523, to maintain the vertical rollers in alignment on the tracks 523.

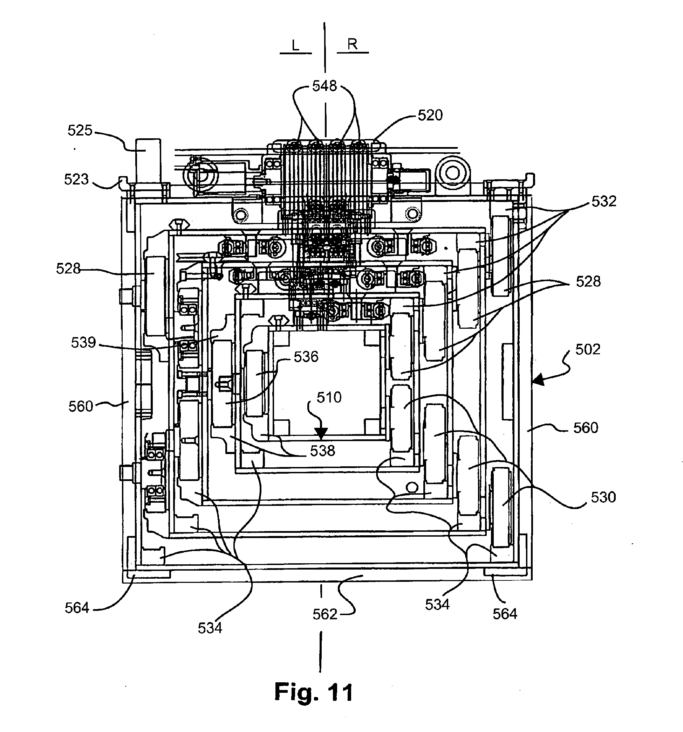

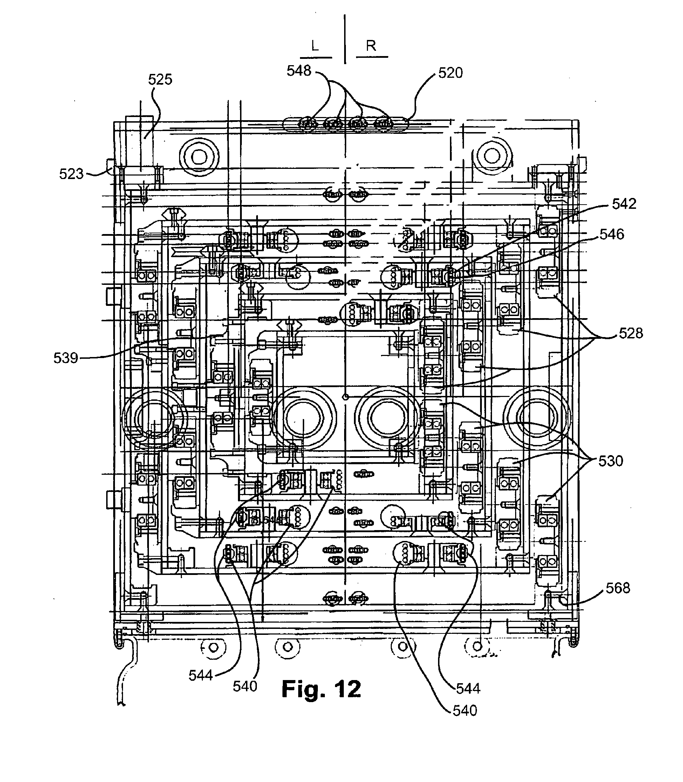

Turning to FIGS. 11 and 12, in the design shown, the first tube 502 may be near square with an approximately 46 cm width or height. The fifth or innermost tube 510 may correspondingly also be near square with a height or width of about 14 cm, in the design shown. The tubes 502-510 may advantageously be made from aluminum plates attached together to form the tube sections. In the design shown, the plates may be 0.6 cm thick aluminum plates. The plates may be bolted together at the corners. Highly rigid tubes may be manufactured by bolting the plates together using cap screws on 2.5 cm centers. In addition, an adhesive such as Loctite adhesive may be applied in the joints between the plates. This further prevents even small amounts of movement between the plates when the arm 501 is loaded. Consequently, load induced noises (typically creaking, popping, etc.) are reduced or avoided.

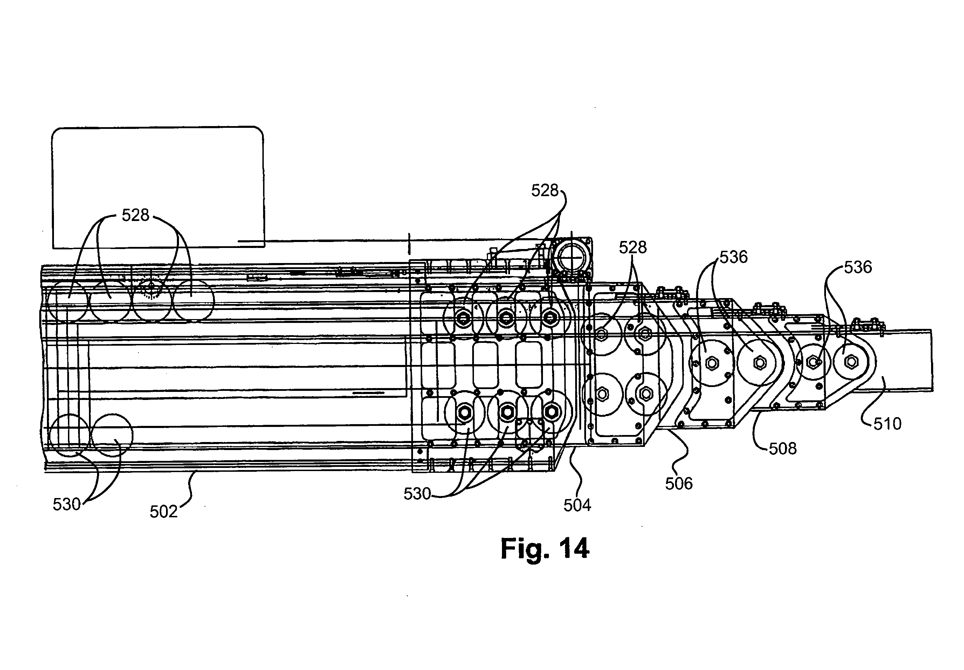

As shown in FIGS. 11, 12 and 14, the tube sections 504-510 are telescopically positioned within each other on rollers. As shown in FIG. 14, the second tube 504 is supported within the first tube 502 via upper and lower rollers 528 and 530, adjacent to the front and back ends of the second tube 504. The third, fourth, and fifth tubes 506-510 are similarly supported on upper and lower rollers 528 and 530. The upper and lower rear rollers 528 and 530 roll on upper and lower rear roller tracks 532 and 534. The tracks 532 and 534 may be located at the corners of the tubes 504-510 to additionally serve as attachment points for the plates 560 and 562 forming the tubes. Front rollers 536 rolling on upper and lower front roller tracks 539 and 538, support the front ends of the telescoping tubes 504-510.

In the specific design shown in Fig. 14, six upper rollers 528 (three on each side) and six lower rollers 530 (also three on each side) are rotatably attached to an inner side wall of the first tube 502, at the front end of the first tube 502, to telescopically support the second tube 504. These front rollers roll in or on tracks 532 and 534 attached to an outer sidewall of the second tube 504. Multiple rollers are used at the front end of the tube as the front end of the each tube carries the most load. Also as shown in Fig. 14, rear rollers are rotatably attached to an outer side wall of the second tube 504, near the rear end of the second tube 504, and roll on or in tracks attached to an inner side wall of the first tube 502. This same roller placement is also used to telescopically support the other tube sections as well. However, as shown in Fig. 14, fewer rollers may be used with smaller tubes, as the loads on them in use is less than on the larger tubes. For example, as shown in Fig. 14, the first tube 502 may have three top and bottom rollers at the front end (on each side, for a total of 12 front rollers). The second tube 504 may two top and bottom rollers at the front end (on each side, for a total of eight front rollers). The third and fourth tubes may have one top roller and one bottom roller at the front end (on each side, for a total of four front rollers). This is shown on the left side L of Figs.11 and 12.

Referring to Fig. 14, at the rear end of the second tube 504, four top rollers 528 and two bottom rollers 530 are rotatably attached (on each side) to an outer sidewall of the second tube 504. The third, fourth and fifth tubes carry less load at the rear of the tube and accordingly may fewer rear rollers. As shown on the right side R of Figs. 11 and 12, these tubes have two rear top rollers 528 and one rear bottom roller 530 (on each side). The rear bottom rollers are typically only loaded when the crane arm is substantially retracted. The arm 501 is symmetrical from side to side relative to the rollers 528 and 530.

The rollers maybe be made of Torlon (polyamide-imide), a material that does not absorb water and is highly stable, so that the rollers do not develop flat spots. The rollers 528 and 530 may be about 100 mm in diameter and undergo up to 0.2 mm of compression under loading, to better absorb vibration and reduce noise. Access openings may be provided in the tubes further allow for inspection, maintenance or replacement of the rollers.

In the specific example shown, the tubes 504-510 are each 6 meters long, with about 4.5 meters of telescopic extension. As a result, the crane arm 501 can provide up to about 18 meters of telescopic movement. The counterweight carrier 520 may be connected via cables and pulleys to hydraulic actuators, but with a 2:1 movement ratio. As a result, 230 cm of piston movement causes the counterweight carrier 520 to move 4.5 meters. This causes the tubes 504-510 to each individually also move by about 4.5 meters, providing collective telescoping extension movement of about 18 meters.

A fixed length extension boom of up to about 6 meters (depending on the pay load) may be attached to the end of the fifth tube 510, to extend the total reach of the crane arm 501 to 28 meters. A typical maximum payload for the crane arm as shown in FIGS. 1-12 would be about 100 kg. With the arm extended to 28 meters, a typical maximum payload would be reduced to about 50 kg.

The amount of overlap between adjacent tubes with the arm fully extended may vary. For example, the overlap between the first and second tubes, with the arm fully extended, may be 120 cm, while the overlap between the second and third tubes is 140 cm. In this example then, the overlap between the third and fourth tubes would be 160 cm, and the overlap between the fourth and fifth tubes would be 175 cm. This increasing amount of overlap from the first to the fourth tube is shown in Figs. 1 and 2.

The tubes 502-510 may be provided with a slight upward curvature as described above relative to the crane arm 501 shown in Figs. 1-11. The curvature is typically about a 1000-1500 meters diameter (resulting in a dip of about 6 mm at the center point of a 6 meter tube). Each of the tubes 502-510 may be provided with the same amount of upward curvature, so that the tubes fit smoothly together, and so that the crane arm 501 is nearly straight under nominal conditions, with little or no sagging. The tubes 502-510 may be open at the ends, to allow for inspection of rollers, pulleys, and other components.

The crane arm 501 may use a drive system similar to the system described in WO/2005/085948. Due to the greater size, length, weight, and loads involved in the crane arm 501, additional cables and pulleys may be used. As shown in FIGS. 11 and 12, sixteen counter weight carrier cables 548 connect the counter weight carrier 520 to the second tube 504. Extension pulleys 540 are attached near the front ends of the second, third, and fourth tubes or sections 504-508. Eight extension cables 544 extend from a fixed anchor 552 at the back end of the first section 502 around the extension pulleys 540 and attach to a tie point near the back end of the third tube 506. A similar design is used between the third and fourth tubes 506 and 508, and between the fourth and fifth tubes 508 and 510.

The drive system for extending and retracting the arm 501 also includes retraction cables 546 extending around retraction pulleys 542 located near the back ends of the tubes 506-510. Again, however, as with the extension cables 544, multiple retraction cables 546 may be used to better handle the loads, and also to reduce strain and stretching of the cables. In the design shown, eight retraction cables 546 are used between the second tube 504 and the third tube 506. Each retraction cable 546 between the second tube 504 and the third tube 506 has a first end attached to an inside wall near the front end of the second tube 504, with the retraction cable 546 extending rearwardly around a retraction pulley 542 near the back end of the third tube 506. The retraction cable 546 passes through an opening in the third tube 506 and is then attached at an anchor point on an inside surface near the back end of the third tube 506.

In the design shown, four retraction cables 546 are provided at the top of the third tube 506 and an additional four retraction cables 546 are provided at the bottom of the third tube 506. Similar retraction cables and retraction pulleys are used between the third tube 506 and the fourth tube 508, and between the fourth tube 508 and the fifth tube 510. Accordingly, each retraction pulley 542 (as well as each extension pulley 540) may be adapted with four cable groups, to accommodate four cables on a single pulley.

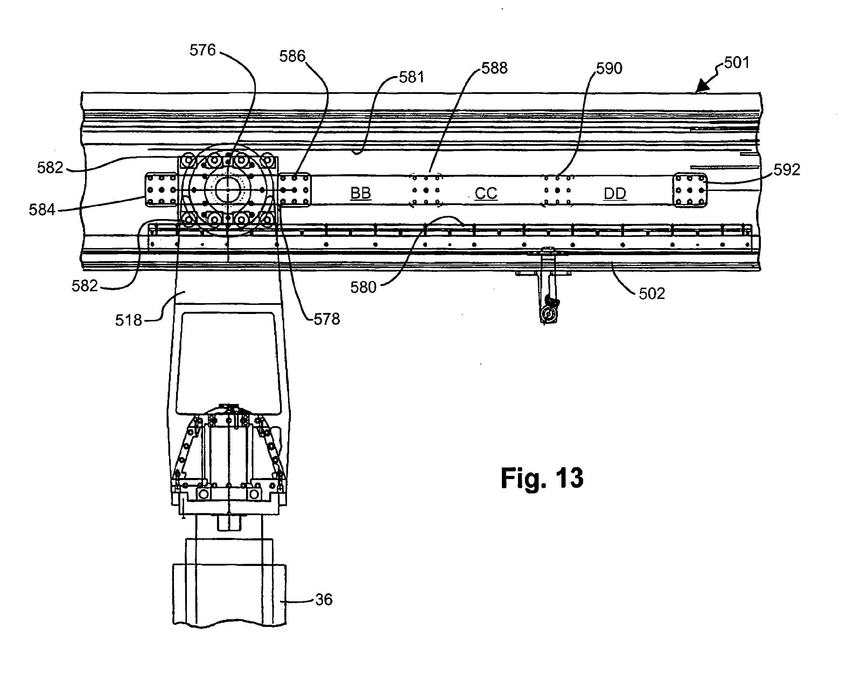

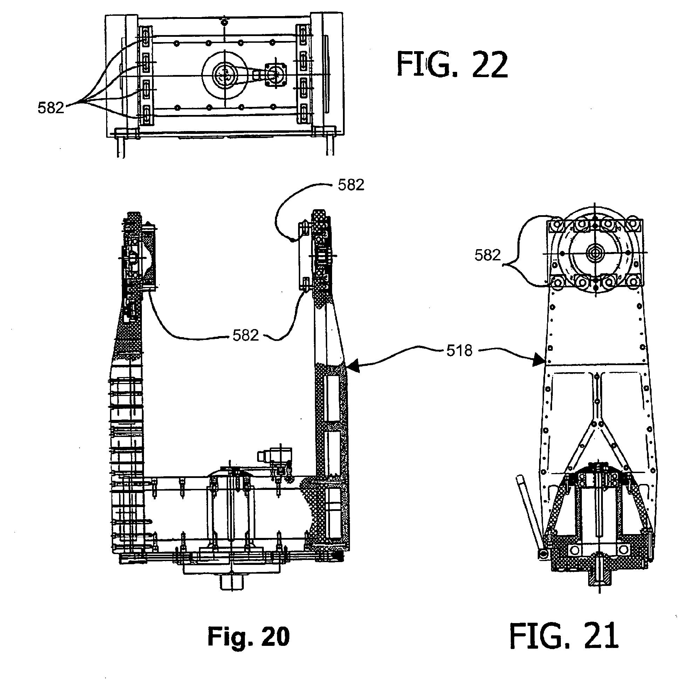

Turning to FIGS.13, and 20-22, the arm 501 is attached to the U-frame 518 via bearings and axle stubs 576. As shown in FIG. 5, the axle stubs 576 are attached to the U-frame 518 on each side via axle plates 578. The axle plates 578 are bolted onto each side of the first tube 502. Specifically, hole patterns at each end of each axle plate 578 align with hole patterns 584 and 586 on the sides of the first tube 502.

Additional identical hole patterns 588, 590, and 592 are spaced apart from the second hold pattern 586 by equal increments. Upper and lower rows of support rollers 582 are provided on each side of the U-frame 518. An upper roller track 581 and a lower roller track 580 are attached to the first section 502 between the first hole pattern 584 and the fifth hole pattern 592, shown in FIG. 13. The rollers 582 may be V-groove rollers which fit into a corresponding V-groove slot formed by hardened surfaces of the upper and lower tracks 581 and 580.

This design allows the pivot axis of the crane arm 501 to be shifted in the front-back direction. FIG. 13 shows the crane arm 501 with the pivot axis (which is coaxial with the axle stubs 576) in the rear most position. This set-up results in a minimal length of the crane arm 501 extending behind the pivot axis 576. A result, less clearance space is required behind the column 36 for maneuvering the crane arm 501. On the other hand, however, additional counterweights are needed to maintain the crane arm 501 in balance. In addition, with the set up as shown in FIG. 13, the crane arm 501 has a maximum amount of forward reach from the column 36.

Referring still to FIG. 13, the location of the pivot axis 576 can be changed by removing the bolts from the axle plates 578. The crane arm 501 is then temporarily supported via the upper track 581 resting on top of the upper row of support rollers 582. The lower rollers 582 and rail 580 hold the arm 501 into contact with all of the upper rollers, regardless of the front/back balance condition of the arm. The arm 501 can then be shifted rearwardly relative to the U-frame 518 by manually pushing and/or pulling on the arm 501. The arm may be pushed rearwardly until the holes in the axle plate 578 are moved into alignment with the next sequential hole pattern in the sides of the first tube or section 502 of the arm 501.

In the design example shown, this allows the arm 501 to be moved into four alternative positions: the position as shown in FIG. 13, or to the positions indicated at BB, CC, or DD, which are each spaced apart by 40 cm. The arm may be angled upwardly for gravity assist in moving the arm 501 from the position shown in FIG. 13 into positions BB, CC, or DD. Once the arm 501 is moved into the desired position, the axle plates 578 are again bolted onto the first tube 502.

## Claims

1. A camera crane comprising an arm (501) having a first section (502), a second section (504) telescopically extendible into and out of the first section (502), and a third section (506) telescopically extendible into and out of the second section (504), a camera platform (748) at a front end of the third section (506), a counterweight (520) movable along the first section (502), the first section (502) having a longitudinal axis and first side and a second side;
**characterized by**:
first and second attachment elements (588, 590) on each of the first and second sides, spaced apart from each other along the longitudinal axis of the first section (502) ;
an arm support comprising a U-frame (518) pivotably attached to a mobile base wheeled vehicle (500) with the first section (502) pivotably attachable to the arm support at a first position using the first attachment elements (588), and with the first section (502) attachable to the arm support at a second position using the second attachment elements (590).

2. The camera crane of claim 1 with the first and second attachment elements (588, 590) comprising first and second hole patterns (584, 586) spaced apart along each of the first and second sides of the first section (502), and first and second axle plates (578) on the arm support alignable with each of the first and second hole patterns (584, 586), respectively, by sliding the arm (501) in a front/back direction relative to the arm support.

3. The camera crane of claim 1 further comprising side rails on the sides of the first section (502), and a plurality of rollers on the arm support engageable with the side rails, to allow the arm (501) to move on the rollers in a longitudinal direction, to change the relative position of the arm (501) on the arm support.

4. The camera crane of claim 1 wherein the first, second and third sections (502, 504, 506) comprise substantially square tubes.

## Patentansprüche

1. Ein Kamerakran, aufweisend: einen Arm (501), der aufweist einen ersten Abschnitt (502), einen zweiten Abschnitt (504), der teleskopisch in den ersten Abschnitt (502) hinein und aus diesem heraus ausfahrbar ist, und einen dritten Abschnitt (506), der teleskopisch in den zweiten Abschnitt (504) hinein und aus diesem heraus ausfahrbar ist, eine Kameraplattform (748) an einem vorderen Ende des dritten Abschnitts (506), ein Gegengewicht (520), das entlang dem ersten Abschnitt (502) bewegbar ist, wobei der erste Abschnitt (502) eine Längsachse und eine erste Seite und eine zweite Seite aufweist,
**gekennzeichnet durch**:
erste und zweite Befestigungselemente (588, 590) an jeder von der ersten und der zweiten Seite, im Abstand voneinander entlang der Längsachse des ersten Abschnitts (502),
eine einen U-Rahmen (518) aufweisende Armstütze, die schwenkbar an einem mobile-Basis-Rollfahrzeug (500) angebracht ist, wobei der erste Abschnitt (502) in einer ersten Position mittels der ersten Befestigungselemente (588) schwenkbar an der Armstütze anbringbar ist, und wobei der erste Abschnitt (502) in einer zweiten Position mittels der zweiten Befestigungselemente (590) an der Armstütze anbringbar ist.

2. Der Kamerakran gemäß Anspruch 1, wobei die ersten und die zweiten Befestigungselemente (588, 590) aufweisen: erste und zweite Lochmuster (584, 586), die entlang jeder von der ersten und der zweiten Seite des ersten Abschnitts (502) im Abstand voneinander angeordnet sind, und eine erste und eine zweite Achsplatte (578) an der Armstütze, die zu jedem von den ersten bzw. zweiten Lochmustern (584, 586) ausrichtbar sind, durch Gleiten des Arms (501) in einer Vorwärts-/ Rückwärtsrichtung bezüglich der Armstütze.

3. Der Kamerakran gemäß Anspruch 1, ferner aufweisend Seitenschienen an den Seiten des ersten Abschnitts (502) und eine Mehrzahl von Rollen an der Armstütze, die mit den Seitenschienen in Eingriff bringbar sind, um zu ermöglichen, dass sich der Arm (501) auf den Rollen in einer Längsrichtung bewegt, um die relative Position des Arms (501) an der Armstütze zu verändern.

4. Der Kamerakran gemäß Anspruch 1, wobei der erste, der zweite und der dritte Abschnitt (502, 504, 506) im Wesentlichen quadratische Rohre aufweisen.

## Revendications

1. Une grue de caméra comportant un bras (501) ayant une première section (502), une deuxième section (504) pouvant coulisser de manière télescopique dans la première section (502) et hors de celle-ci, et une troisième section (506) pouvant coulisser de manière télescopique dans la deuxième section (504) et hors de celle-ci, une plate-forme de caméra (748) à une extrémité avant de la troisième section (506), un contrepoids (520) mobile le long de la première section (502), la première section (502) ayant un axe longitudinal et un premier côté et un deuxième côté,
**caractérisée par** :
des premiers et deuxièmes éléments de fixation (588, 590) de chacun des premier et deuxième côtés, espacés les uns des autres le long de l'axe longitudinal de la première section (502),
un support de bras comprenant un cadre en U (518) fixé de manière pivotante à un véhicule de base mobile à roues (500) avec la première section (502) pouvant être fixée de manière pivotante au support de bras dans une première position moyennant les premiers éléments de fixation (588), et avec la première section (502) pouvant être fixée au support de bras dans une deuxième position moyennant les deuxièmes éléments de fixation (590).

2. La grue de caméra selon la revendication 1, avec les premiers et deuxièmes éléments de fixation (588, 590) comprenant des premiers et deuxièmes motifs de trous (584, 586) espacés le long de chacun des premier et deuxième côtés de la première section (502), et une première et une deuxième plaque d'axe (578) sur le support de bras, pouvant être alignées respectivement avec chacun des premiers et deuxièmes motifs de trous (584, 586) en coulissant le bras (501) dans une direction avant/arrière par rapport au support de bras.

3. La grue de caméra selon la revendication 1, comprenant en outre des rails latéraux sur les côtés de la première section (502), et une pluralité de rouleaux sur le support de bras pouvant se mettre en prise des rails latéraux, afin de permettre que le bras (501) se déplace sur les rouleaux dans un sens longitudinal, afin de changer la position relative du bras (501) sur le support de bras.

4. La grue de caméra selon la revendication 1, dans laquelle les première, deuxième et troisième sections (502, 504, 506) comportent des tubes essentiellement carrés.
